# EUROPÄISCHE PATENTSCHRIFT

(11) **EP 0 283 717 B1**
(45) Veröffentlichungstag und Bekanntmachung des Hinweises auf die Patenterteilung: **18.05.1994**
(21) Anmeldenummer: 88102351.9
(22) Anmeldetag: 18.02.1988
(51) Int. Cl.: G02B 5/08, G02B 27/14, G02B 26/00, G02B 5/24

(54) **Optisch-mechanische Einrichtung**
Opto-mechanical device
Dispositif opto-mécanique

(30) Priorität: 20.03.1987 DE 3708883
(43) Veröffentlichungstag der Anmeldung: 28.09.1988
(73) Patentinhaber: Menke, Josef-Ferdinand, Dipl.-Ing., D-24960 Glücksburg (DE)
(72) Erfinder: Menke, Josef-Ferdinand, Dipl.-Ing., D-24960 Glücksburg (DE)
(74) Vertreter: Riecke, Manfred

(56) Entgegenhaltungen:
- EP-A- 0 144 611
- DE-A- 2 713 547
- GB-A- 2 074 341
- US-A- 3 802 759
- US-A- 3 909 105
- US-A- 4 416 509

## Beschreibung

Die Erfindung betrifft eine optisch-mechanische Einrichtung zur abwechselnden Ablenkung eines Strahlenganges in eine erste Richtung und in eine zweite Richtung.

Beim Bau optischer Geräte besteht oft das Erfordernis, einen Strahlengang in zwei Teilstrahlengänge aufzuspalten. Hierzu werden in aller Regel teildurchlässig verspiegelte Spiegel, Prismen und dgl. verwendet. Diese optischen Bauglieder haben zwar den Vorteil eines konstanten, ununterbrochenen Strahlenganges, sie haben andererseits aber den Nachteil, daß die beiden Teilstrahlen nicht die Intensität des Ursprungsstrahles erreichen.

Bei vielen Geräten kommt es aber nicht so sehr darauf an, daß die Teilstrahlengänge kontinuierlich sind, als vielmehr darauf, daß sie die volle Intensität des Ursprungsstrahles besitzen. Mit anderen Worten bedeutet dies, daß der Ursprungsstrahl nicht aufgespalten werden muß, sondern daß er abwechselnd in eine erste und in eine zweite Richtung umzulenken ist.

Der Erfindung liegt die Aufgabe zugrunde, eine hierfür geeignete Einrichtung anzugeben.

Diese Aufgabe ist durch eine optisch-mechanische Einrichtung gelöst, welche die im Anspruch angegebenen Merkmale besitzt. Wesentlichste Merkmale dieser Einrichtung sind ein Tripelspiegelrad, dessen äußerer Umfang mit nach außen gerichteten Tripelspiegeln besetzt ist, sowie Reflexionsmittel, die mit Abstand zum Umfangsrand im Strahlengang stehen.

Aus der US-PS 4 416 509 ist bereits eine aus Tripelspiegeln bestehende optische Einrichtung bekannt. Bei dieser Einrichtung sind die Tripelspiegel jedoch in Kugelform angeordnet und können den Strahlengang lediglich reflektieren, jedoch nicht aufspalten.

Auch die US-PS 3 909 105 zeigt ein Spiegelrad, bei dem mehrere Spiegel zu Winkelspiegeln zusammengesetzt sind. Diese optische Einrichtung kann die gestellte Aufgabe aber ebenfalls nicht lösen, da mit ihr lediglich ein Scan-Effekt mit Strahlenstabilisierung bezweckt wird. Eine Strahlenaufspaltung ist mit ihr weder möglich noch beabsichtigt.

In der Zeichnung ist die Erfindung in einem Ausführungsbeispiel dargestellt. Es zeigen:
- Fig. 1: schematisch einen Sektor des erfundenen Tripelspiegelrades,
- Fig. 2: eine Draufsicht auf eine Abwicklung eines Sektors des Tripelspiegelrades,
- Fig. 3: schematisch die vom Tripelspiegelrad bewirkte Ablenkung eines Strahlenganges,
- Fig. 4: eine vergrößerte Teildarstellung aus Fig.3

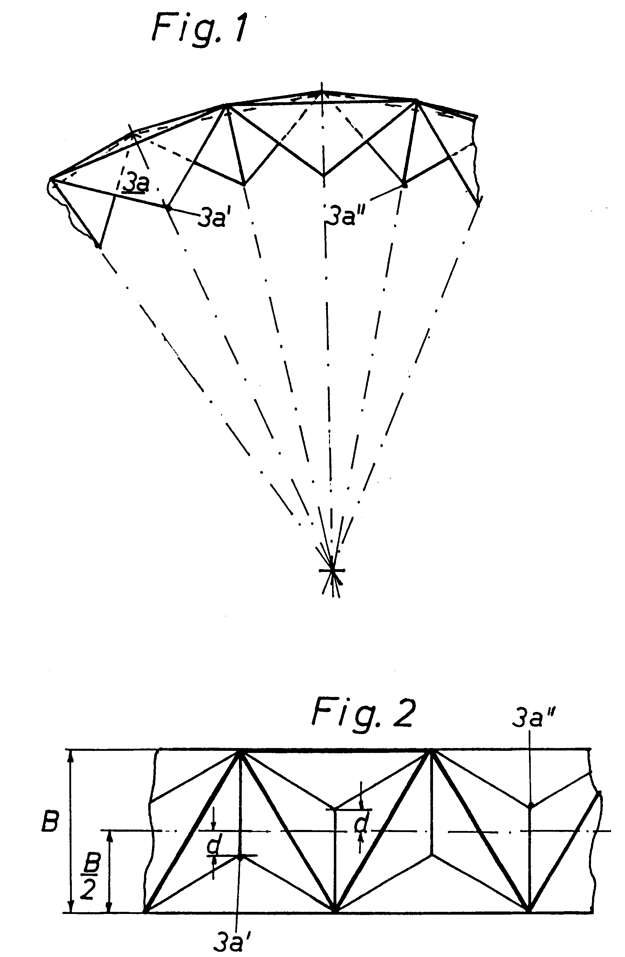

In Fig.1 sind mit 3a gleichartige Tripelspiegel bezeichnet, die um 180° zueinander gedreht, d.h. gleichsam "auf Umschlag" aneinandergereiht sind, wobei ihre Basisflächen den Umfang eines Rades 3 mit der Mittenachse 3b bilden.

Dieses Rad 3 ist auf seinem gesamten Umfang mit Tripelspiegeln 3a (oder in einer anderen Ausführungsform mit pyramidenförmigen Prismen) besetzt, deren Basisflächen den Außenumfang des Rades 3 definieren. Bei den Tripelspiegeln 3a handelt es sich um Hohlkörper, deren Innenflächen verspiegelt sind. Bei den Prismen erfolgt an sich an den Innenflächen Totalreflexion, sie können aber zusätzlich auch außen noch verspiegelt sein.

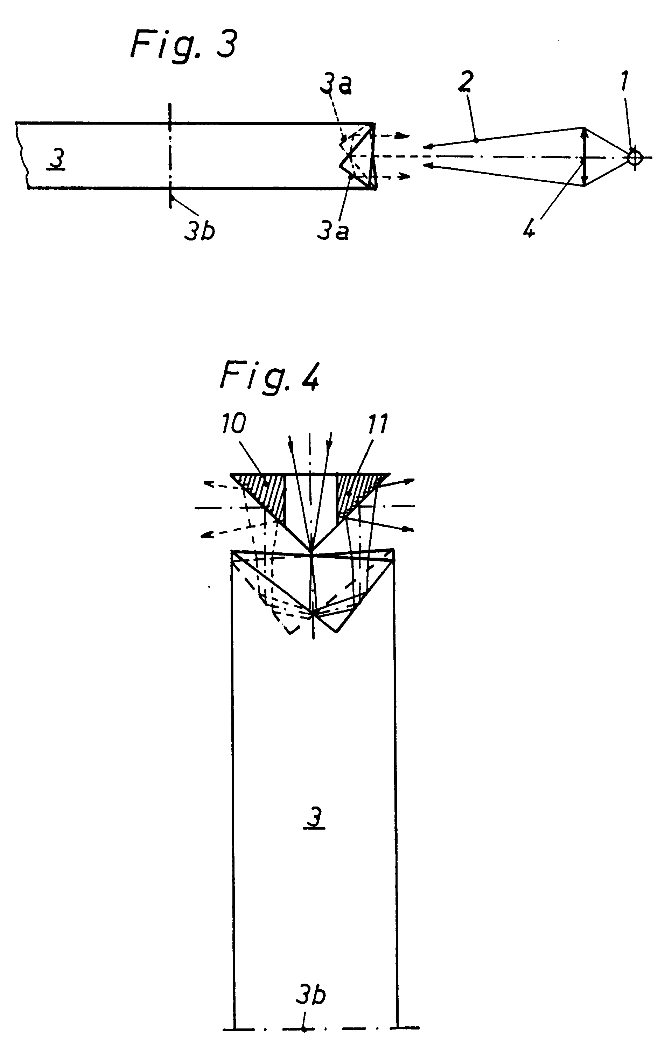

Der Einfachheit halber wird im folgenden nur noch von Tripelspiegeln gesprochen. Deren Anordnung auf dem Rad 3 ist am besten aus den Figuren 1 und 2 zu erkennen. Vor allem ist aus Fig.2 ersichtlich, daß die Tripelspiegel 3a abwechselnd in umgekehrter "Höhenlage", d.h. um 180° zueinander gedreht, aneinander gereiht sind, so däß sie insgesamt ein Band der Breite B ergeben. Die Basiskanten der Tripelspiegel, die auf dem Radumfang liegen, sind in der Zeichnung besonders dick ausgezogen, um einen räumlichen Eindruck zu vermitteln.

Aus. Fig.2 ist auch zu erkennen, daß die vertieften Spitzen 3aʹ und 3aʺ der Tripelspiegel 3a abwechselnd um eine gleiche Distanz d von der Mittellinie B/2 des Rades 3 entfernt liegen.

Die Funktionsweise des Tripelspiegelrades 3 ist am besten aus Fig.3 erkennbar. Von einer Strahlenquelle 1 geht ein Strahlenbüschel 2 aus, das durch eine vorgesetzte Optik 4 auf die Mittellinie B/2 (= Mitte der Spiegel- bzw. Prismenspur) fokussiert wird.

Im Bereich der Tripelspiegel 3a ist in Fig.3 nur noch der Mittenstrahl gezeichnet, um die Darstellung nicht zu sehr zu komplizieren. Bei Drehung des Tripelspiegelrades 3 um seine Mittenachs 3b fallen die Strahlen abwechseln in die alternierend angeordneten Tripelspiegel 3a und werden von diesen mit der Zeitteilung 50% : 50% abwechseln nach der einen und nach der anderen Seite ausgelenkt.

Wie Fig.4 zeigt, kann die Auslenkung durch zusätzliche Bauelemente, nämlich durch die Spiegel 10 und 11, noch weiter gespreizt werden. Es kann so erreicht werden, daß die reflektierten Strahlen in einem an sich beliebigen Winkel zum Einfallsstrahl verlaufen, z.B. in einem Winkel von 90°.

Die Weiterverarbeitung des in dieser Weise mit der erfundenen optisch-mechanischen Einrichtung abwechselnd umgelenkten Strahlenganges richtet sich nach der Art des optischen Gerätes, in dem diese Einrichtung Verwendung findet.

## Patentansprüche

1. Optisch-mechanische Einrichtung zur abwechselnden Ablenkung eines Strahlenganges in zwei verschiedene Richtungen, mit:
einem Tripelspiegelrad (3) bestehend aus einem Rad, an dessen äußerem Umfangsrand nach außen gerichtete Tripelspiegel (3a) oder -prismen so angeordnet sind, daß ihre Spitzen (3a', 3a'') nach innen gerichtet sind, wobei die Tripelspiegel bzw. -prismen über den Radumfang unmittelbar nebeneinander so angeordnet sind, daß eine der drei spiegelnden Flächen eines Tripelspiegels bzw. -prismas mit einer der spiegelnden Flächen des einen benachbarten Tripelspiegels bzw. -prismas eine gemeinsame Kante bildet und eine andere der drei spiegelnden Flächen des einen Tripelspiegels bzw. -prismas mit einer der spiegelnden Flächen des anderen benachbarten Tripelspiegels bzw. -prismas eine weitere gemeinsame Kante bildet, so daß jeder Tripelspiegel bzw. prisma mit jedem seiner beiden benachbarten Tripelspiegel bzw. -prismen eine gemeinsame Kante hat; wobei die Tripelspiegel bzw. -prismen abwechselnd so weit zur Mittellinie (B/2) verschoben sind, daß bei Drehung des Tripel-Spiegelrades um seine Mittelachse (3b) ein Strahl (2) der von außen auf die Mitte des Umfangsrandes des Tripelspiegelrades gerichtet ist, in zwei reflektierte Teilstrahlen mit der Zeitteilung 50% : 50% aufgeteilt wird,
und mit Reflexionsmitteln (10, 11), die mit einem Abstand zum Umfangsrand im Strahlengang der reflektierten Teilstrahlen angeordnet sind und die beiden Teilstrahlen in zwei verschiedene Richtungen ablenken.

## Claims

1. Opto-mechanical device for the alternating deflection of a ray path in two different directions, with: a triple mirror drum (3) consisting of a drum, at the outer circumference of which outwardly directed triple mirrors (3a) or prisms are so arranged that their apices (3a', 3a'') are directed inwardly, wherein the triple mirrors or prisms are so arranged directly alongside one another over the drum circumference that one of the three reflective surfaces of one triple mirror or prism forms a common edge with one of the reflective surfaces of one adjacent triple mirror or prism and another one of the three reflective surfaces of the one triple mirror or prism forms a further common edge with one of the reflective surfaces of the other adjacent triple mirror or prism, so that each triple mirror or prism has a common edge with each of its two adjacent triple mirrors or prisms, wherein the triple mirrors or prisms are displaced in alternation so far relative to the centre line (B/2) that on rotation of the triple mirror drum about its centre axis (3b) a beam (2), which is directed from the outside onto the centre of the circumference of the triple mirror drum, is divided into two reflected partial beams with the time division 50% : 50%, and with reflection means (10, 11) which are arranged in the beam path of the reflected partial beams at a spacing from the circumference and deflect the two partial beams in two different directions.

## Revendications

1. Dispositf opto-mécanique pour la déviation d'un faisceau de rayons alternativement dans deux directions différentes comportant :
- une roue à miroirs triples (3) constituée par une roue sur la périphérie la plus externe de laquelle sont disposés des miroirs prismatiques triples (3a) ou des prismes orientés vers l'extérieur de telle manière que leurs sommets (3a', 3a'') soient orientés vers l'intérieur, lesdits miroirs triples ou prismes étant disposés sur la périphérie de la roue les uns à côté des autres en se touchant de telle façon que l'une des trois surfaces réfléchissantes d'un miroir triple ou d'un prisme forme avec l'une des faces réfléchissantes de l'un des miroirs triples ou des prismes voisins une arête commune et qu'une autre des trois surfaces réfléchissantes du miroir triple ou prisme forme avec l'une des surfaces réfléchissantes de l'autre miroir triple ou prisme voisin une autre arête commune de sorte que chaque miroir triple ou prisme possède avec chacun des deux miroirs triples ou prismes qui lui sont voisins une arête commune ; les miroirs triples ou les prismes étant inclinés alternativement par rapport à la ligne médiane (B/2), de telle manière que par la rotation de la roue à miroirs triples autour de son axe central (3b), un rayon (2) tombant de l'extérieur sur le milieu de la périphérie de la roue à miroirs triples est divisé en deux rayons réfléchissants partiels avec une division dans le temps de 50% /50%, et des composants de réflexion (10, 11) disposés à une certaine distance de la périphérie de la roue sur le parcours des rayons des faisceaux partiels réfléchis qui dévient les deux faisceaux de rayons partiels dans deux directions différentes.
